# EUROPÄISCHE PATENTSCHRIFT

(11) **EP 2 805 388 B1**
(45) Veröffentlichungstag und Bekanntmachung des Hinweises auf die Patenterteilung: **05.12.2018**
(21) Anmeldenummer: 13701000.5
(22) Anmeldetag: 11.01.2013
(51) Int. Cl.: H01R 39/08, H01R 43/14, F03D 9/25, H01R 39/24

(54) **SCHLEIFRINGÜBERTRAGER**
SLIP RING TRANSMITTER
ECHANGEUR POUR BAGUE COLLECTRICE

(30) Priorität: 16.01.2012 DE 102012200561
(43) Veröffentlichungstag der Anmeldung: 26.11.2014
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2013/050520
(87) Internationale Veröffentlichungsnummer: WO 2013/107699

(56) Entgegenhaltungen:
- EP-A1- 0 662 736
- EP-A2- 0 054 380
- WO-A1-2009/130277
- JP-A- 2006 107 925
- US-A1- 2008 143 110
- US-A1- 2009 045 627

## Beschreibung

Die vorliegende Erfindung betrifft einen Schleifringübertrager sowie ein Verfahren zum Instandsetzen eines Schleifringübertragers. Weiterhin betrifft die vorliegende Erfindung eine Windenergieanlage mit einem Schleifringübertrager.

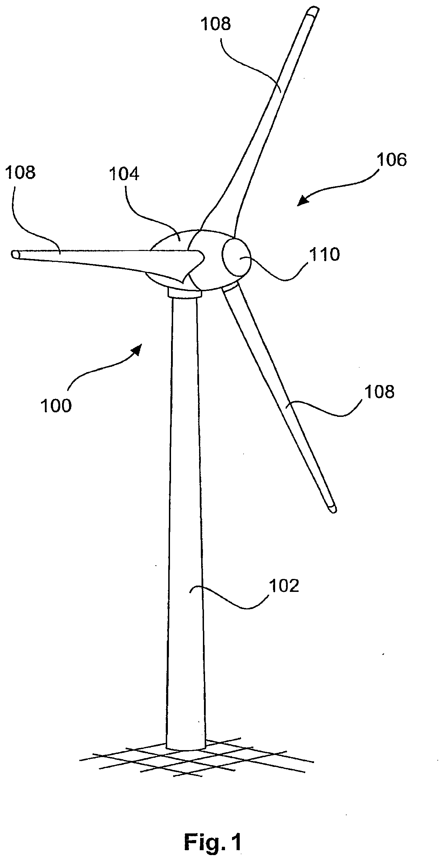

Windenergieanlagen sind allgemein bekannt und eine typische Anlage ist in der Figur 1 gezeigt. Dort dreht stimmungsgemäß durch Wind angetrieben der aerodynamische Rotor relativ zum stehenden Teil der Gondel. Um elektrische Energie oder elektrische Signale vom stehenden Teil mit dem drehenden Teil, nämlich mit dem Rotor, auszutauschen, ist regelmäßig ein Schleifringübertrager vorgesehen. Insbesondere kann Energie zu sogenannten Pitch-Motoren übertragen werden, die die Rotorblätter des Rotors in ihrem Anstellwinkel verstellen können. Weiterhin kann beispielsweise Energie für eine elektrische Blattheizung, falls vorhanden, übertragen werden.

Eine Besonderheit besteht für getriebelose Windenergieanlagen, die einen fremderregten Synchrongenerator einsetzen. Bei solchen Windenergieanlagen wird über den Schleifringübertrager auch, oder über einen separaten Schleifringübertrager, ein Erregerstrom zum Erzeugen eines elektromagnetischen Feldes in dem Läufer über den Schleifringübertrager übertragen. Hierbei muss Strom mit hoher Leistung übertragen werden, die mehrere hundert kW betragen kann.

Insbesondere sind die folgenden drei Typen von Schleifringübertragern bekannt. Die wohl älteste Möglichkeit besteht darin, eine Kohlebürste auf einem entsprechenden Kontaktring schleifen zu lassen, um das elektrische Signal, sei es nun ein Informations- oder Energiesignal, von der Kohlebürste auf den Kontaktring zu übertragen oder umgekehrt. Solche Kohlebürsten haben sich etabliert und deren Eigenschaften sind allgemein bekannt. Sie sind verhältnismäßig kostengünstig, machen aber einen regelmäßigen Tausch der Kohlebürsten erforderlich.

Zur Verbesserung wird ein sogenannter "Golddraht-Schleifringübertrager" eingesetzt. Hierbei wird eine Platine mit einer Vielzahl von Golddrähten, die im Grunde wie bei einem Nagelbrett abstehen, auf einem entsprechenden Schleifring geführt, der auf diese Golddrähte elektrisch und mechanisch abgestimmt ist. Hier ist insbesondere der Vorteil, dass durch die Materialwahl, durch den Einsatz von Gold, eine gute Kontakteigenschaft mit geringem Abrieb erreicht wird. Gleichwohl entstehen hier mit der Zeit an den Positionen der jeweiligen Golddrähte Ablagerungen auf dem korrespondierenden Schleifring in dort gefertigten Rillen, in denen auch Störstellen, insbesondere in der Goldschicht entstehen können. Der Schleifring besteht üblicherweise aus Messing oder einer ähnlichen Metalllegierung, die mit einer Goldschicht im Kontaktbereich versehen ist. In den Rillen kann zum Kühlen und zum Verbessern der Kontaktierung Öl vorgesehen sein. Bei wenig Öl und/oder hohem Verschleiß, bzw. hohem Verschleißzustand reibt der Golddraht an dem Schleifring und verändert dort die Oberfläche, was aber schwer erkennbar ist. Dadurch leidet auch der Golddraht und nutzt schneller ab.

Als weitere Verbesserung wird ein sogenannter "Multi-Brush-Schleifringübertrager" vorgeschlagen. Hierbei läuft wenigstens ein Bündel vieler haarfeiner Drähtchen auf einem entsprechenden Schleifring. Solche Bündel, oder Büschel dieser vielen haarfeinen Drähtchen sind üblicherweise auf einer Platine angeordnete, befestigt und kontaktiert und daher wird hier üblicherweise nur von Platine gesprochen, was die besagten Bündel bzw. Büschel beinhaltet. Die Platine bildet somit einen Platine und ist somit das Gegenstück zum Schleifring, auf dem sie schleift. Die Platine kann auch als Bürste bezeichnet werden. Diese Begriffe gelten grundsätzlich unabhängig von der konkret verwendeten Technik. Im Grunde erfolgt hier die Kontaktierung nach dem Prinzip, dass die Drähtchen mit wenig Kraft an dem korrespondierenden Schleifring anliegen können und die gute Kontaktierung einfach durch die hohe Anzahl der Drähtchen erfolgt. Dieses Bündel ähnelt einer Bürste, so dass sich der Begriff "Multi-Brush" auch im deutschen Sprach-gebrauch in den entsprechenden Fachkreisen durchgesetzt hat. Eine solche Multi-Brush-Technik ist verhältnismäßig robust handhabbar und vermeidet die beschriebenen Ablagerungen der Golddraht-Technik und einen Kohleabrieb bei den Kohlebürsten.

Problematisch bei der Golddraht-Technik ist insbesondere, dass neben den Golddrähten auch der korrespondierende Schleifring verschleißt. Es entstehen Ablagerungen und Störstellen am Schleifring, die wiederum zu einem starken Verschleiß der Golddrähte führen. Nach entsprechendem Verschleiß muss somit zusätzlich zu der Golddraht-Platine mit den Golddrähten auch der Schleifring getauscht werden, was kompliziert, kostenaufwendig und damit unerwünscht ist.

Das Deutsche Patent- und Markenamt hat in der Prioritätsanmeldung zu vorliegender Anmeldung folgenden Stand der Technik recherchiert: DE 24 58 991 B2; DE 10 2007 060 985 A1; DE 694 14 687 T2; US 4,398,113 A sowie JP 2009-225578A.

Das Dokument US 2009/045627 A1 beschreibt einen Schleifring übertrager des Golddraht-Typs und dessen Verschleiß, wobei hier ein verbesserter Schleifring vorgeschlagen wird, um den Verschleiß zu reduzieren und somit die Instandsetzungskosten zu minimieren. Dokument JP 2006-107925 A beschreibt verschiedene Typen von Schleifringübertragern, wobei gemäß einem ersten Ausführungsbeispiel ein Schleifringübertrager des Golddraht-Typs und gemäß einem weiteren Ausführungsbeispiel ein Schleifringübertrager gemäß dem Multi-Brush-Typ beschrieben wird.

Der vorliegenden Erfindung liegt somit die Aufgabe zugrunde, wenigstens eines der oben genannten Probleme zu adressieren. Insbesondere soll eine Lösung geschaffen werden, bei der Schleifringübertrager des Typs "Golddraht", also Schleifringübertrager, die entsprechend der beschriebenen Golddraht-Technik aufgebaut sind, möglichst einfach und kosten-günstig instand gesetzt werden können, wenn sie entsprechend stark verschlissen sind. Zumindest soll eine alternative Ausgestaltung geschaffen werden.

Erfindungsgemäß wird ein Verfahren nach Anspruch 1 vorgeschlagen. Hierbei kommt auch in Betracht, nur eine von mehreren Platinen zu tauschen. Es können auch mehrere unterschiedliche Techniken in einem Schleifringübertrager vorgesehen sein, wie beispielsweise eine Golddraht-Technik für die Übertragung von Signalen mit geringem Strom, z.B. 0,5 bis 3 A, und eine Kohlebürsten-Technik für die Übertragung von Signalen mit hohen Strömen, z.B. 5 bis 500A. Erfindungsgemäß wird somit ein Schleifringübertrager des Golddraht-Typs instand gesetzt. Dieser Schleifringübertrager umfasst jedenfalls vor der Instandsetzung wenigstens einen Schleifring, insbesondere einen Goldring, einerseits und eine Golddraht-Platine, die mit Golddrähten als Golddrahtbürste versehen ist, die auf dem Schleifring schleift, andererseits. Zum Instandsetzen des Schleifringübertragers, nämlich insbesondere nachdem ein Verschleiß aufgetreten ist, der eine Instandsetzung erforderlich macht, wird die Golddraht-Platine aus dem Schleifringübertrager ausgebaut und eine Multi-Brush-Platine im Austausch gegen diese Golddraht-Platine eingesetzt.

Es wurde nämlich erkannt, dass sich die Platineder Multi-Brush-Technik mit dem Schleifring der Golddraht-Technik zusammen verwenden lässt. Somit kann eine verschlissene Golddraht-Platine gegen eine Multi-Brush-Platine getauscht werden, wodurch das Auswechseln des Schleifrings des Golddraht-Typs vermieden werden kann. Durch diesen Tausch der Golddraht-Platine gegen die Multi-Brush-Platine kann der Schleifringübertrager, der zumindest ursprünglich vollständig einer des Golddraht-Typs war, auf einfache Weise und kostengünstig instand gesetzt werden.

Das Instandsetzen erfolgt für einen Schleifringübertrager, bei dem der Goldring bereits Riefen aufweist, die durch Verwendung mit der Golddraht-Platine entstanden sind. Hier wurde erkannt, dass sich die Multi-Brush-Platine auch dann zur Verwendung mit einem Schleifring des Golddraht-Typs eignet, wenn dieser Schleifring Riefen aufweist. Die Platine der Multi-Brush-Technik ist in der Lage, sich an die Kontaktoberfläche des Schleifrings anzupassen, wie sich herausgestellt hat. Insbesondere kann die Platine der Multi-Brush-Technik auch in die Riefen des Schleifrings eingreifen. Der Schleifring, der aufgrund des Verschleißes bereits Riefen aufweist, braucht somit nicht getauscht zu werden und kann im Schleifringübertrager verbleiben. Bisher hätte im Fall eines verschlissenen Schleifringübertragers der Golddraht-Technik meist die Golddraht-Platine und der Schleifring getauscht werden müssen, weil eine neue Golddraht-Platine, nämlich die Golddrähte, durch die beschriebenen Störstellen schnell abnutzt und dadurch die Lebenserwartung drastisch verkürzt wird.
Vorzugsweise wird die Multi-Brush-Platine bei dem Tausch so eingesetzt, dass er auf dem Schleifring schleift und in die Riefen eindringt und in den Riefen und außerhalb der Riefen elektrische Kontakte zwischen der Multi-Brush-Platine und dem Schleifring der Golddraht-Technik herstellt. Somit kann ein Schleifring des Golddraht-Typs, der bereits erhebliche Riefen aufweist, weiterverwendet werden.
Weiterhin wird ein Schleifringübertrager vorgeschlagen, der einen Schleifring der Golddraht-Technik umfasst, insbesondere einen Goldring umfasst. Ein solcher Goldring weist entsprechend Goldbestandteile zur Erhöhung der Leitfähigkeit insbesondere in einem Übergang zu einer Platine auf. Dieser Schleifring ist somit zur Verwendung mit einer Golddraht-Platine vorbereitet. Weiterhin umfasst der Schleifringübertrager eine Multi-Brush-Platine, der den Golddraht-Technik-Schleifring schleifend kontaktiert. Somit wird ein Schleifringübertrager vorgeschlagen, der im Wesentlichen aus einer Kombination eines Schleifrings der Golddraht-Technik und einer Platine der Multi-Brush-Technik besteht bzw. diese Elemente im Wesentlichen aufweist.
Vorteilhafterweise weist der Schleifring wenigstens eine durch eine Golddraht-Platine erzeugte Riefe auf. Der vorgeschlagene Schleifringübertrager ist somit eine Lösung, bei der Teile eines Schleifringübertragers weiterbenutzt werden, die ansonsten aufgrund ihres Verschleißzustandes getauscht werden müssten. Insbesondere kann der Tausch des Golddraht-Schleifrings vermieden, zumindest aber verzögert werden.
Weiterhin wird eine Windenergieanlage mit einem Schleifringübertrager gemäß wenigstens einer der beschriebenen Ausführungsformen vorgeschlagen. Durch diesen Schleifringübertrager können elektrische Signale vom stehenden Teil einer Gondel zu dem drehenden Teil einer Gondel, nämlich dem aerodynamischen Rotor, übertragen werden. Entsprechend wird vorgeschlagen, dass der Schleifringübertrager so verwendet wird, dass er elektrische Signale, seien es Informationssignale und/oder Leistungssignale, vom stehenden Teil der Gondel zum aerodynamischen Rotor überträgt. Über einen solchen Schleifringübertrager müssen je nach Windenergieanlage mehrere unterschiedliche elektrische Signale übertragen werden. Entsprechend kann ein solcher Schleifringübertrager kompliziert und teuer sein. Es kommt hinzu, dass seine Anordnung im Bereich des Übergangs von stehendem Teil zu drehendem Teil der Gondel der Windenergieanlage, was eine bevorzugte Position des Schleifringübertragers darstellt, diesen schwer zugänglich machen lässt und die vorgeschlagene Lösung, die das Tauschen eines Schleifrings des Golddraht-Typs vermeidet oder zumindest hinauszögert, somit besonders vorteilhafte Wirkung entfaltet.

Gemäß einer weiteren Ausführungsform wird vorgeschlagen, den Schleifringübertrager in einer Windenergieanlage zu verwenden, die getriebelos ist. Die Getriebelosigkeit der Windenergieanlage hat Konsequenzen auf ihren Aufbau insgesamt und auch auf die notwendigen Ströme des Generators insgesamt. Dadurch entstehen entsprechende Anforderungen an den Schleifringübertrager und die genannten Vorteile können sich dann in besonderem Maße entfalten.

Vorzugsweise wird als Generator eine fremderregte Synchronmaschine verwendet. In diesem Fall muss auch ein Erregerstrom zum Läufer der Synchronmaschine und damit über den Schleifringübertrager übertragen werden. Besonders hierfür ist eine gemäß wenigstens einer der Ausführungsformen beschriebener Schleifringübertrager in vorteilhafter Weise vorzusehen. Insbesondere muss dieser Schleifringübertrager für die Übertragung entsprechender Ströme und entsprechender Leistungen vorbereitet sein. Ein vorteilhafter Schleifringübertrager und damit eine Windenergieanlage mit einem solchen vorteilhaften Schleifringübertrager ist dabei in der Lage, Ströme im Bereich von einigen hundert Ampere über die Multi-Brush-Platine auf den Schleifring der Golddraht-Technik, insbesondere auf den riefenbehafteten Schleifring der Golddraht-Technik zu übertragen. Es können beispielsweise 5A bis 500A in Betracht kommen. Vorzugsweise ist der Schleifringübertrager in oder an einem den aerodynamischen Rotor ganz oder teilweise tragenden Achszapfen angeordnet. Insbesondere weist dieser Achszapfen mit einer vorderen Spitze bei bestimmungsgemäßer Verwendung in Richtung zum Wind und in oder an dieser Spitze des Achszapfens ist der Schleifringübertrager bevorzugt angeordnet. Somit können elektrische Signale vom stehenden Teil der Gondel über den Achszapfen zum Schleifringübertrager und von diesem auf den drehenden Teil, nämlich den aerodynamischen Rotor, übertragen werden. Ein solcher Schleifringübertrager ist je nach konkreter Ausgestaltung und Größe der Windenergieanlage schwer zugänglich und durch die beschriebene Instandsetzung eines Schleifringübertragers einer der obigen Ausführungsformen und/oder durch Verwendung eines Schleifringübertragers gemäß einer der entsprechend beschriebenen Ausführungsformen kann hier ein reduzierter Wartungsaufwand erreicht werden. Zudem kann das Tauschen von Elementen eines in der Spitze des Achszapfens angeordneten Schleifringübertragers je nach konkreter Ausgestaltung der Windenergieanlage auch ein Sicherheitsrisiko für das ausführende Betriebspersonal darstellen. Solche Sicherheitsrisiken werden somit durch die vorgeschlagenen Lösungen vermieden, zumindest reduziert.

Nachfolgend wird die Erfindung anhand von Ausführungsformen unter Bezugnahme auf die begleitenden Figuren näher erläutert.
- Fig. 1: zeigt eine Windenergieanlage.
- Fig. 2: zeigt schematisch einen Schleifringübertrager des Golddraht-Typs.
- Fig. 3: zeigt schematisch einen Schleifringübertrager des Multi-Brush-Typs.
- Fig. 4: zeigt einen Schleifringübertrager mit einem Schleifring des Golddraht-Typs und eine Platine des Multi-Brush-Typs.
- Fig. 5: zeigt vergrößert und schematisch einen Übergangsbereich zwischen Golddraht-Platine und Schleifring eines Schleifringübertragers des Golddraht-Typs.
- Fig. 6: zeigt vergrößert und schematisch den Übergang einer Platine der Multi-Brush-Technik zu einem Schleifring mit Riefen der Golddraht-Technik.

Nachfolgend können gleiche Bezugszeichen ähnliche, aber nicht identische, Elemente bezeichnen, um den funktionalen Zusammenhang dieser Elemente zu unterstreichen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Fig. 1 zeigt eine getriebelose Windenergieanlage 100, die einen Schleifringübertrager verwendet, um elektrische Signale von dem stehenden Teil der Gondel 104 auf den Rotor 106, nämlich insbesondere den Spinner 110, zu übertragen. Die gezeigte Windenergieanlage verwendet einen fremderregten Synchrongenerator, für den der Erregerstrom von dem stehenden Teil der Gondel 104 über den Schleifringübertrager zum Spinner 110 übertragen wird. Die gezeigte Windenergieanlage 100 weist zudem in ihrem Anstellwinkel verstellbare Rotorblätter 108 auf. Zum Verstellen des Anstellwinkels dieser Rotorblätter 108 werden sowohl Informationen zum Verstellen als auch Stellenergie vom stehenden Teil der Gondel 104 zum Spinner 110 über den Schleifringübertrager übertragen. Es wird darauf hingewiesen, dass unter dem stehenden Teil der Gondel 104 verstanden wird, dass dieser hinsichtlich einer Rotorachse unbeweglich ist. Selbstverständlich kann eine Windnachführung, eine sogenannte Azimut-Verstellung, also eine Drehung um eine senkrechte Achse, für die gesamte Gondel 104 vorgenommen werden. Der Rotor 106 dreht sich relativ zum stehenden Teil der Gondel 104 um eine im Wesentlichen horizontale Achse. Insoweit ist die Windenergieanlage 100 eine des Typs der Horizontalachsen-Windenergieanlagen.

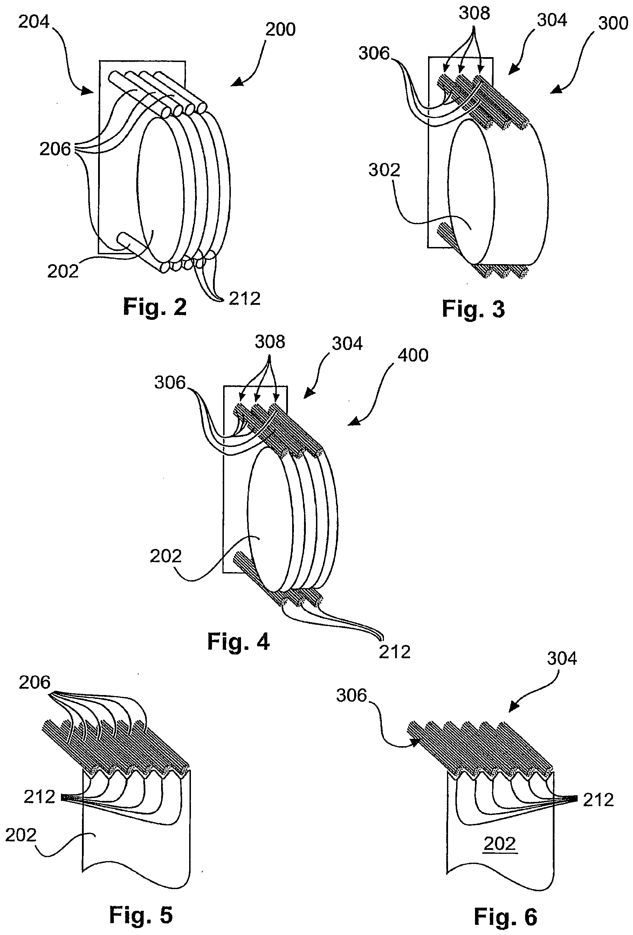

Fig. 2 veranschaulicht einen Schleifringübertrager 200 der Golddraht-Technik bzw. des Golddraht-Typs mit einem Golddraht-Schleifring 202 und einer Golddraht-Platine 204. Die Golddraht-Platine 204 weist diverse Golddrähte 206 auf, von denen in Fig. 2 zweimal vier veranschaulichend dargestellt sind. Die Golddrähte 206 sind auch elektrisch mit der Platine 204 verbunden, was durch Lötpunkte erfolgt. Die Golddrähte 206 werden durch die Golddraht-Platine 204 gegen den Golddraht-Schleifring 202 gedrückt und stellen dadurch einen elektrischen Kontakt her.

Fig. 2 zeigt den Schleifringübertrager 200 in einem Zustand nach längerer Benutzung und damit in einem einen gewissen Verschleiß aufweisenden Zustand. Aus diesem Grunde sind bereits Riefen 212 vorhanden, die durch einige der Golddrähte 206 hervorgerufen wurden. Tatsächlich dürften üblicherweise alle Golddrähte, die einen elektrischen Kontakt zum Golddraht-Schleifring herstellen, nach einer gewissen Laufzeit eine Riefe hinterlassen haben. Allerdings sind die Riefen regelmäßig unterschiedlich tief und damit hinterlassen die Golddrähte 206 auf dem Golddraht-Schleifring 202 ein unregelmäßiges Profil.

Würde nun die Golddraht-Platine 204 gegen eine neue getauscht werden, wären alle Golddrähte 206 wieder gleich lang, so dass solche Golddrähte 206, die im Bereich einer Riefe 212 angeordnet wären, keinen elektrischen Kontakt zum Golddraht-Schleifring 202 herstellen würden. Ein selektiver Tausch einer Golddraht-Platine 204 ist somit zumindest ungünstig, wenn nicht ausgeschlossen.

Fig. 3 veranschaulicht einen Schleifringübertrager 300 der Multi-Brush-Technik. Dieser Schleifringübertrager 300 umfasst einen Multi-Brush-Schleifring 302, auf dem eine Multi-Brush-Platine 304 läuft. Die Platine 304 weist sehr viele einzelne Drähtchen oder Härchen 306 auf, die ähnlich einer Bürste auf den Schleifring 302 aufgesetzt sind und dadurch zu einer unzähligen Menge an kleinen Kontaktpunkten führt, so dass insgesamt durch die vielen kleinen Drähtchen bzw. Härchen 306 Strom vom oder zum Schleifring 302 übertragen werden kann. Die Härchen 306 sind in Büscheln 308 gebündelt.

Aufgrund der vielen kleinen bürstenartig angeordneten Drähtchen oder Härchen 306 ergibt sich im Grunde kein klar definierbarer Kontaktpunkt für jedes Drähtchen 306, weil diese dafür nicht starr genug angeordnet sind. Entsprechend ergibt sich auch über eine längere Laufzeit keine Riefenbildung, wie das bei dem Schleifringübertrager der Golddraht-Technik der Fall war und in Fig. 2 veranschaulicht ist. Tatsächlich werden heutzutage Schleifringübertrager der Multi-Brush-Technik denen der Golddraht-Technik vorgezogen.

Fig. 4 zeigt einen kombinierten Schleifringübertrager 400, wie er als Lösung vorgeschlagen wird. Dieser kombinierte Schleifringübertrager 400 weist veranschaulichend einen Golddraht-Schleifring 202 auf, wie er in Fig. 2 gezeigt ist, und wirkt zusammen mit einer Platine 304 der Multi-Brush-Technik, wie er in Fig. 3 gezeigt ist. Die vielen Drähtchen bzw. Härchen 306 werden im Grunde sanft auf den Golddraht-Schleifring 202 gedrückt und passen sich individuell der Oberfläche und damit auch den Riefen 212 an. Es hat sich somit als vorteilhaft erwiesen, die Golddraht-Platine 204 nach Verschleiß auszutauschen gegen eine Multi-Brush-Platine 304 der Fig. 3. Insbesondere wird aber eine Bürste speziell an den Schleifring der Golddraht-Technik angepasst, indem für jede Rille, oder für mehrere Rillen des Schleifrings ein Drahtbüschel vorgesehen sein kann.

Es wurde somit erkannt, dass die Platine 304 der Multi-Brush-Technik gemäß Fig. 3, der ursprünglich auf einen entsprechenden Schleifring 302 angepasst war, sich dazu eignet, sich an das geschaffene Profil, insbesondere die Riefen 212 des Golddraht-Schleifrings 202, anzupassen. Dies ist in der vergrößerten und vereinfachten Ansicht der Fig. 6 dargestellt. Demnach passt sich die Platine 304, der in Fig. 6 nur teilweise gezeigt ist, mit seinen vielen Drähtchen bzw. Härchen 306 insbesondere an die Riefen 212 an. Diese Anpassung erfolgt dadurch, dass diese Härchen 306 unterschiedlich stark gebogen werden, was in der Ansicht der Fig. 6 wegen der dort verwendeten Perspektive nicht zu erkennen ist. Im Übrigen zeigen sowohl Fig. 5 als auch Fig. 6 prinzipiell eine Schnittansicht des Golddraht-Schleifrings 202, wobei aus Gründen der Übersichtlichkeit keine Schnittschraffur eingezeichnet ist.

## Patentansprüche

1. Verfahren zum Instandsetzen eines Schleifringübertragers (200) des Golddraht-Typs, der einen Schleifring (202), insbesondere Goldring zur Verwendung mit einer Golddraht-Platine (204) als Platine (204) aufweist, umfassend den Schritt,
- Ausbauen einer Golddraht-Platine (204) aus dem Schleifringübertrager (200) **gekennzeichnet durch** den Schritt,
- Einsetzen einer Multi-Brush-Platine (304) als Austausch gegen die Golddraht-Platine (204), wobei der Schleifring (202) Riefen (212) durch Verwendung mit der Golddraht-Platine (204) aufweist und beim Tausch der Golddraht-Platine (204) gegen die Multi-Brush-Platine (304) der Schleifring (202), insbesondere Goldring, in dem Schleifringübertrager (400) verbleibt.

2. Verfahren nach Anspruch 1,
wobei die Multi-Brush-Platine (304) so eingesetzt wird, dass er auf dem Schleifring (202) schleift und in Riefen (212) bzw. in die Riefen (212) eindringt und in den Riefen (212) und außerhalb der Riefen (212) elektrische Kontakte zwischen der Multi-Brush-Platine (304) und dem Schleifring (202) herstellt.

3. Schleifringübertrager (400) umfassend einen Schleifring (202) der Golddrahttechnik,
insbesondere Goldring, der eingerichtet ist, mit einer Golddraht-Platine (204) verwendet zu werden,
**dadurch gekennzeichnet, dass**
der Schleifringübertrager (400) ferner umfasst,
eine den Schleifring schleifend kontaktierende Multi-Brush-Platine (304), wobei der Schleifring (202) wenigstens eine durch eine Golddraht-Platine (204) erzeugte Riefe (212) aufweist,
wobei die Multi-Brush-Platine (304) so auf dem Schleifring (202) schleift und in die wenigstens eine Riefe (212) eindringt, dass in der wenigstens einen Riefe (212) und außerhalb der wenigstens einen Riefe (212) elektrische Kontakte zwischen der Multi-Brush-Platine (304) und dem Schleifring (202) hergestellt werden, die zum Übertragen eines elektrischen Stroms, insbesondere zum Übertragen eines Erregerstroms geeignet sind.

4. Windenergieanlage (100) mit einem Schleifringübertrager (400) nach Anspruch 3, wobei
die Windenergieanlage (100) getriebelos ist und/oder als Generator eine fremderregte Synchronmaschine verwendet und
der Schleifringübertrager (400) zum Übertragen eines Erregerstroms des Generators vorbereitet ist.

5. Windenergieanlage (100) nach Anspruch 4,
wobei ein aerodynamischer Rotor ganz oder teilweise von einem Achszapfen getragen wird und der Schleifringübertrager (400) in und/oder an dem Achszapfen angeordnet ist.

## Claims

1. A method of reconditioning a slip ring transmitter (200) of the gold wire type which has a slip ring (202), in particular a gold ring, for use with a gold wire board (204) as the circuit board (204), including the step:
- removing a gold wire board (204) from the slip ring transmitter (200), **characterized by** the step,
- fitting a multi-brush board (304) as a replacement for the gold wire board (204), wherein the slip ring (202) has grooves (212) due to use with the gold wire board (204) and upon replacement of the gold wire board (204) by the multi-brush board (304) the slip ring (202), in particular the gold ring, remains in the slip ring transmitter (400).

2. A method according to claim 1 wherein the multi-brush board (304) is so fitted that it rubs on the slip ring (202) and penetrates into grooves (212) or into the grooves (212) and makes electric contacts in the grooves (212) and outside the grooves (212) between the multi-brush board (304) and the slip ring (202).

3. A slip ring transmitter (400) including a slip ring (202) using gold wire technology, in particular a gold ring, adapted to be used with a gold wire board (204),
**characterized in that**
the slip ring transmitter (400) further comprises,
a multi-brush board (304) which rubbingly contacts the slip ring, wherein the slip ring (202) has at least one groove (212) produced by a gold wire board (204),
wherein the multi-brush board (204) so rubs on the slip ring (202) and penetrates into the at least one groove (212) that electric contacts are made in the at least one groove (212) and outside the at least one groove (212) between the multi-brush board (304) and the slip ring (202), which electric contacts are suitable for the transmission of an electric current, in particular for the transmission of an exciter current.

4. A wind power installation (100) having a slip ring transmitter (400) according to claim 3, wherein
the wind power installation (100) is gearless and/or uses an externally excited synchronous machine as its generator and
the slip ring transmitter (400) is adapted for the transmission of an exciter current of the generator.

5. A wind power installation (100) according to claim 4, wherein an aerodynamic rotor is entirely or partially carried by a shaft journal and the slip ring transmitter (400) is arranged in and/or at the shaft journal.

## Revendications

1. Procédé servant à réparer un transmetteur à bague collectrice (200) du type à fil en or, qui présente une bague collectrice (202), en particulier une bague en or destinée à être utilisée avec une platine à fil en or (204) en tant que platine (204), comprenant l'étape
- de démontage d'une platine à fil en or (204) du transmetteur à bague collectrice (200),
**caractérisé par** l'étape
- d'installer une platine multi-balais (304) en remplacement contre la platine à fil en or (204), dans lequel la bague collectrice (202) présente des stries (212) du fait de l'utilisation avec la platine à fil en or (204) et la bague collectrice (202), en particulier la bague en or, reste dans le transmetteur à bague collectrice (400) lors du remplacement de la platine à fil en or (204) contre la platine multi-balais (304).

2. Procédé selon la revendication 1,
dans lequel la platine multi-balais (304) est employée de telle sorte qu'elle frotte sur la bague collectrice (202) et s'enfonce dans des stries (212) ou les stries (212) et établit dans les stries (212) et à l'extérieur des stries (212) des contacts électriques entre la platine multi-balais (304) et la bague collectrice (202).

3. Transmetteur à bague collectrice (400) comprenant une bague collectrice (202) de la technique à fil en or,
en particulier bague en or, qui est mise au point pour être utilisée avec une platine à fil en or (204),
**caractérisé en ce que**
le transmetteur à bague collectrice (400) comprend en outre
une platine multi-balais (304) établissant un contact par frottement avec la bague collectrice, dans lequel la bague collectrice (202) présente au moins une strie (212) générée par une platine à fil en or (204),
dans lequel la platine multi-balais (304) frotte sur la bague collectrice (202) et s'enfonce dans l'au moins une strie (212) de telle sorte que des contacts électriques sont établis entre la platine multi-balais (304) et la bague collectrice (202) dans l'au moins une strie (212) et à l'extérieur de l'au moins une strie (212), qui sont adaptés pour transmettre un courant électrique, en particulier pour transmettre un courant d'excitation.

4. Eolienne (100) avec un transmetteur à bague collectrice (400) selon la revendication 3,
dans laquelle
l'éolienne (100) est sans transmission et/ou une machine de synchronisation externe est utilisée en tant que générateur, et
le transmetteur à bague collectrice (400) est préparé pour transmettre un courant d'excitation du générateur.

5. Eolienne (100) selon la revendication 4,
dans laquelle un rotor aérodynamique est supporté en totalité ou en partie par un pivot axial, et le transmetteur à bague collectrice (400) est disposé dans et/ou au niveau du pivot axial.
